(19) Europäisches Patentamt / European Patent Office / Office européen des brevets

(11) **EP 2 584 307 B1**

(12) **EUROPEAN PATENT SPECIFICATION**

(45) Date of publication and mention
of the grant of the patent:
**03.03.2021 Bulletin 2021/09**

(21) Application number: **10857798.2**

(22) Date of filing: **27.09.2010**

(51) Int Cl.:
**G01B 11/26** *(2006.01)*    **G01N 21/90** *(2006.01)*

(86) International application number:
**PCT/JP2010/066644**

(87) International publication number:
**WO 2012/042582 (05.04.2012 Gazette 2012/14)**

(54) **GLASS BOTTLE INSPECTION DEVICE**

PRÜFVORRICHTUNG FÜR GLASFLASCHEN

DISPOSITIF D'INSPECTION DE BOUTEILLE EN VERRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**24.04.2013 Bulletin 2013/17**

(73) Proprietor: **Toyo Glass Co., Ltd.**
**Shinagawa-ku**
**Tokyo 141-0022 (JP)**

(72) Inventor: **HARADA Takashi**
**Kanagawa 210-0863 (JP)**

(74) Representative: **Haseltine Lake Kempner LLP**
**Redcliff Quay**
**120 Redcliff Street**
**Bristol BS1 6HU (GB)**

(56) References cited:
| | |
|---|---|
| **JP-A- 9 178 448** | **JP-A- H09 178 448** |
| **JP-A- 2006 276 025** | **JP-A- 2007 240 468** |
| **JP-A- 2007 240 468** | **JP-A- 2007 240 469** |
| **JP-A- 2007 240 469** | |

**Description**

Technical Field

The present invention relates to a technology with which a sealing surface of a mouth portion of a glass bottle is inspected, and in particular, relates to a technology with which inclination of the sealing surface of the mouth portion of the glass bottle (sealing surface inclination) is inspected at high speed.

Background Art

In general, in a process of manufacturing glass bottles, glass bottles manufactured in a bottle manufacturing machine are guided to a glass bottle inspection device and whether or not there are defects in the bottles is inspected by the glass bottle inspection device. Glass bottles with specified flaws are rejected as defective bottles. As an example of such a glass bottle inspection device, an inspection device, with which inclination of the sealing surface of the mouth (referred to as "sealing surface inclination" hereafter) of a bottle is inspected, is known. By rejecting glass bottles with large sealing surface inclination using such a glass bottle inspection device, leakage of liquids contained in bottles and troubles occurring when bottles are capped are prevented.

Inspection devices that inspect sealing surface inclination have been disclosed in, for example, Patent Literatures 1 to 3 cited below. In these inspection devices, images (static images) of a rotating bottle mouth portion are continuously taken by an image taking means. In the images having been taken, two points on the sealing surface of the bottle mouth are detected and the difference between the two points in the vertical direction is calculated. The calculated difference is regarded as the sealing surface inclination. In Patent Literature 3, the inclination of the bottle bottom is obtained from the outputs of two displacement sensors attached to the bottom.

Citation List

Patent Literature

PTL 1: Japanese Unexamined Patent Application Publication No. 2007-240468
PTL 2: Japanese Unexamined Patent Application Publication No. 2007-240469
PTL 3: Japanese Patent Application Publication No. H09-178448

Summary of Invention

Technical Problem

When a bottle is rotated, the bottle may wobble or be inclined by a shock caused by rotation. Detecting inclination of the sealing surface of a bottle in an inclined position does not lead to correct inspection of the sealing surface inclination of the bottle. Thus, related-art sealing-surface inclination measurement devices have a problem in correctness.

A task of the present invention is to allow sealing surface inclination of a bottle to be correctly inspected even when the bottle wobbles or is inclined due to rotation of the bottle while the bottle is being rotated on an inspection table.

Solution to Problem

According to the present invention, a glass bottle inspection device includes
a rotating means that causes a glass bottle to rotate about a bottle axis,
a mouth portion illuminating means that emits light toward a bottle mouth of the glass bottle,
a mouth portion image taking means configured to take images of the bottle mouth illuminated by the light emitted from the mouth portion illuminating means during rotation of the bottle,
a base portion illuminating means that emits light toward a base portion of the glass bottle, and
a base portion image taking means configured to take images of the base portion illuminated by the light emitted from the base portion illuminating means during rotation of the bottle, wherein the device is configured to:

detect two points G and H on a sealing surface of the bottle mouth in a mouth portion image taken by the mouth portion image taking means;

detect two points M and N at a bottom end of the bottle in a base portion image taken by the base portion image taking means at the same time and in the same plane as the mouth portion image is taken, and calculate the sealing surface inclination of the bottle in a vertically standing position by using the two points G and H of the mouth portion and the two points M and N of the base portion.

By detecting the two points M and N at the bottom end, inclination of the bottle itself can be obtained. By subtracting the inclination of the bottle itself from the inclination of the sealing surface of the bottle mouth calculated by using the two points G and H on the sealing surface of the bottle mouth, sealing surface inclination of the bottle in the vertically standing position can be calculated.

The sealing surface inclination of the bottle in the vertically standing position may be calculated by using the two points G and H of the mouth portion and the two points M and N of the base portion in, for example, the following specific method. That is, when coordinates of the two points G and H on the sealing surface of the bottle mouth portion are respectively (Gx, Gy) and (Hx, Hy) and coordinates of the two points M and N at the bottom end of the bottle are respectively (Mx, My) and (Nx, Ny), the sealing surface inclination of the bottle in the vertically standing position is calculated by using the following expression:

$$\texttt{sealing surface inclination = |(Gy - Hy) - (My - Ny) *}$$

$$\texttt{(Gx - Hx)/(Mx- Nx)|.}$$

(Gy - Hy) is a vertical distance between the two points G and H of the mouth portion, (My - Ny) is a vertical distance between the two points M and N at the bottom end, (Gx - Hx) is a horizontal distance between the two points G and H of the mouth portion, and (Mx - Nx) is a horizontal distance between the two points M and N at the bottom end.

Advantageous Effects of Invention

With a glass bottle inspection device according to the present invention, sealing surface inclination of a bottle in a vertically standing position can be correctly calculated even when inspecting the bottle that wobbles on an inspection table. Thus, inspection can be correctly performed.

Brief Description of Drawings

[Fig. 1] Fig. 1 generally illustrates a glass bottle inspection device according to the present invention.
[Fig. 2] Fig. 2 illustrates image processing of a mouth portion.
[Fig. 3] Fig. 3 illustrates image processing of a base portion.
[Fig. 4] Fig. 4 illustrates a method of calculating sealing surface inclination.

Description of Embodiments

An embodiment according to the present invention will be described below with reference to the drawings.

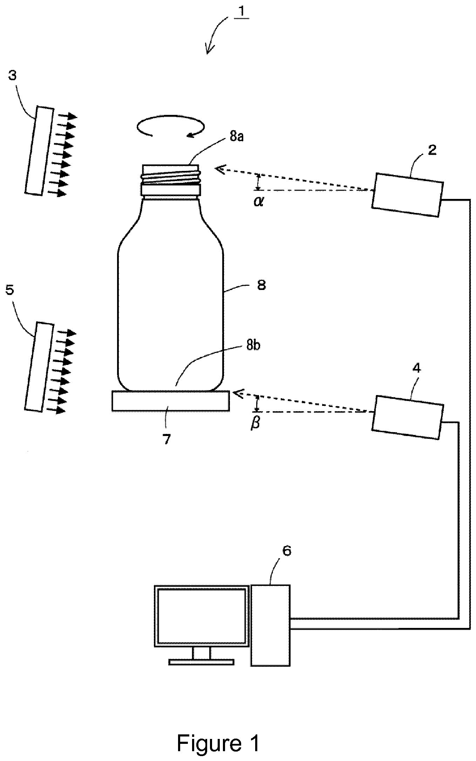

Fig. 1 illustrates a general structure of a glass bottle inspection device 1 according to the present embodiment. In Fig. 1, a glass bottle 8 is guided onto an inspection table 7 by a guiding means (not shown) and rotated on the inspection table 7 about a bottle axis by a rotating means (not shown).
The guiding means for a bottle and the rotating means for a bottle may use known means such as means described in the aforementioned PTL 1 and PTL 2.
A mouth portion image taking means 2 and a mouth portion illuminating means 3 are disposed so as to oppose each other with a mouth portion 8a of a glass bottle 8 interposed therebetween. A base portion image taking means 4 and a base portion illuminating means 5 are disposed so as to oppose each other with a base portion 8b of the glass bottle interposed therebetween.
The image taking means 2 and 4 may use, for example, a high-speed area sensor camera to which a telecentric lens with fixed image magnification is attached. The illuminating means 3 and 5 may use, for example, a diffusing planar light source including blue LEDs that emit blue light and are arranged in a matrix. A single large illuminating means may be used instead of the separate mouth portion illuminating means and base portion illuminating means.
The optical axis of the mouth portion image taking means 2 is inclined upward relative to a horizontal line by an angle α, thereby taking images of the bottle mouth portion 8a from slightly below the bottle mouth portion 8a. This prevents the image taking means from taking an image of part of the edge of the bottle mouth portion, the part being located behind the bottle mouth portion when seen from the image taking means.

The optical axis of the base portion image taking means 4 is inclined upward relative to a horizontal line by an angle β, thereby taking images of the base portion 8b from slightly below the base portion 8b. This prevents the image taking means from taking an image of part of the edge of the base portion, the part being located behind the base portion when seen from the image taking means.

It is suitable that both α and β be set to 1° to 3°.

Images (still images) taken by the image taking means 2 and 4 are transmitted to an image processing means 6 and used to calculate sealing surface inclination and determine whether or not the glass bottle is good. The image processing means 6 may use a personal computer with a monitor. The monitor is capable of displaying necessary information such as images taken by the image taking means 2 and 4 and sealing surface inclination having been calculated.

Image taking is performed, for example, 24 times per one rotation of the glass bottle (interval of 15°). In every image taking, images of the mouth portion and the base portion can be simultaneously taken and the sealing surface inclination can be calculated using the mouth portion image and the base portion image having been taken simultaneously.

The image processing means performs the following image processing every time the mouth portion image and the base portion image simultaneously taken by the image taking means 2 and 4, respectively, are received.

[Processing of Mouth Portion Image]

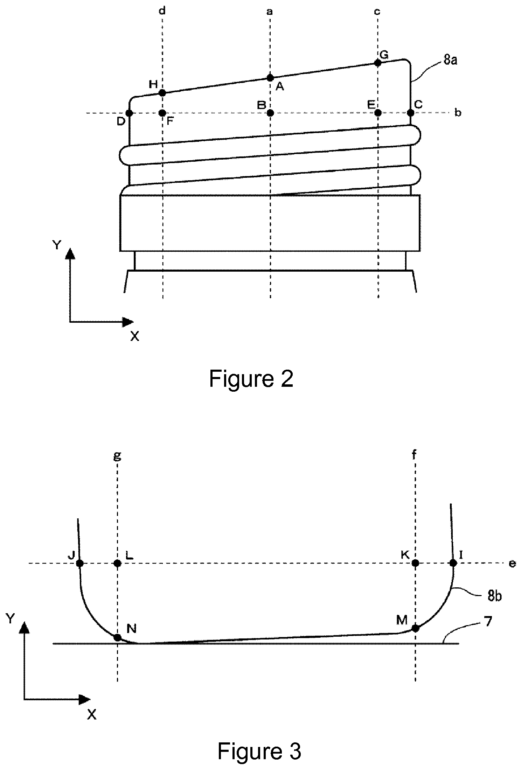

Fig. 2 schematically illustrates the mouth portion image of the mouth portion 8a of the glass bottle taken by the mouth portion image taking means 2. Since the mouth portion of the glass bottle appears dark and the background appears bright in the images, the following image processing can be easily performed by binarizing the images.

Upon receipt of a single mouth portion image, the image processing means 6 detects an intersection A, at which a vertical line a set to pass through an arbitrary X-coordinate position near the bottle central axis intersects the bottle mouth portion 8a. Then, a point B is determined at a position shifted from the intersection A downward along the Y-axis by a specified distance (specified so that the point B does not interfere with a threaded portion), and intersections C and D, at which a horizontal line b that passes through the point B intersects both ends of the bottle mouth portion 8a, are calculated.

Then, points E and F are determined at positions respectively shifted from the intersections C and D inward with respect to the bottle mouth portion along the X-axis by specified distances, and intersections G and H are determined such that vertical lines c and d, which are respectively pass through the points E and F, intersect the sealing surface of the mouth portion.

Thus, the positions of measurement points G and H, with which inclination of the sealing surface of the bottle mouth portion is measured, can be always similarly obtained.

[Processing of Base Portion Image]

Fig. 3 schematically illustrates the base portion image of the base portion 8b of the glass bottle taken by the base portion image taking means 4. Since the base portion 8b of the glass bottle and the inspection table 7 appear dark and the background appears bright in the image, the following image processing can be easily performed by binarizing the image.

The image processing means 6 detects intersections I and J, at which a horizontal line e, which is set to pass through an arbitrary Y-coordinate position slightly above an upper surface of the inspection table 7, intersects both ends of the bottle base portion 8b in the base portion image taken at the same time as the mouth portion image.

Then, points K and L are determined at positions respectively shifted from the intersections I and J inward with respect to the bottle base portion along the X-axis by specified distances, and intersections M and N, at which vertical lines f and g that respectively pass through the points K and L intersect the bottom end of the base portion, are calculated. In the case where there is no bright portion, for example, on the line g (the case where the point N is in contact with the inspection table 7), the point N is set at a position on the upper surface of the inspection table.

Thus, the positions of measurement points M and N, with which inclination of the base portion is measured, can be always similarly obtained.

[Calculation of Sealing Surface Inclination]

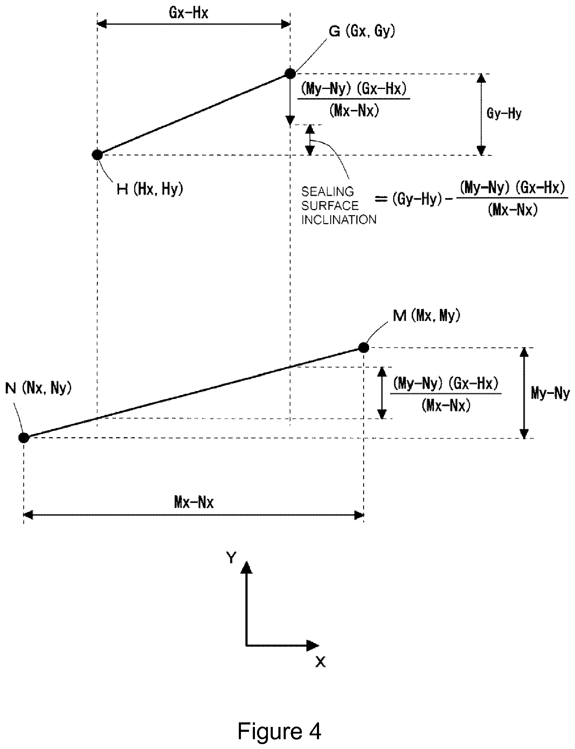

Fig. 4 illustrates a method of calculating sealing surface inclination.

A line connecting the two measurement points G and H of the bottle mouth portion is inclined, and the difference between the measurement points G and H in the vertical direction is expressed by (Gy - Hy). This inclination includes the sealing surface inclination and inclination of the bottle itself.

A line connecting the two measurement points M and N of the bottle base portion is also inclined, and this inclination corresponds to the inclination of the bottle itself. Since the amount of inclination of the bottle (inclination of the base portion) in the vertical direction affecting inclination of the sealing surface of the mouth portion is expressed by (My - Ny)(Gx - Hx)/(Mx - Nx), the difference in the vertical direction between the two points of the bottle mouth (= sealing surface inclination) of the bottle in a vertically standing position can be obtained by subtracting (My - Ny)(Gx - Hx)/(Mx - Nx) from the difference between the two points in the bottle mouth portion in the vertical direction (Gy - Hy). The result of the above-described expression may be negative. For this reason, the absolute value of the result is used.

The unit of the sealing surface inclination calculated here is the number of pixels. Thus, in the case where conversion of the result into mm is desired, it can be obtained by multiplying the number of pixels by the length (mm) of a single pixel.

[Good/Bad Determination]

The image processing means 6 may determine whether or not a glass bottle is good in accordance with the calculated sealing surface inclination.

A variety of methods may be used for the good/bad determination. An example of the determination methods is as follows: In the case where images of the mouth portion and the base portion are taken 24 times per one rotation of a single glass bottle (interval of 15°), sealing surface inclination is calculated 24 times. In the case where the sum of the amounts of calculated sealing surface inclination is greater than a specified threshold value, the bottle can be determined to be defective, and otherwise, the bottle can be determined to be good.

Alternatively, in the case where the maximum value among 24 amounts of calculated sealing surface inclination per bottle is greater than a specified threshold value, the bottle can be determine to be defective, and otherwise, the bottle can be determined to be good.

Reference Signs List

| 1 | glass bottle inspection device |
|---|---|
| 2 | mouth portion image taking means |
| 3 | mouth portion illuminating means |
| 4 | base portion image taking means |
| 5 | base portion illuminating means |
| 6 | image processing means |
| 7 | inspection table |
| 8 | glass bottle |
| 8a | mouth portion |
| 8b | base portion |

**Claims**

1. A glass bottle inspection device (1) comprising:

rotating means that causes a glass bottle (8) to rotate about a bottle axis;
mouth portion illuminating means (3) that emits light toward a bottle mouth (8a) of the glass bottle (8);
mouth portion image taking means (2) configured to take images of the bottle mouth (8a) illuminated by the light emitted from the mouth portion illuminating means (3) during rotation of the bottle (8);
base portion illuminating means (5) that emits light toward a base portion (8b) of the glass bottle (8); and
base portion image taking means (4) configured to take images of the base portion (8b) illuminated by the light emitted from the base portion illuminating means (5) during rotation of the bottle (8),
wherein the device is configured to:

detect two points G and H on a sealing surface of the bottle mouth (8a) in a mouth portion image taken by the mouth portion image taking means (2),
detect two points M and N at a bottom end (8b) of the bottle (8) in a base portion image taken by the base portion image taking means (4) at the same time and in the same plane as the mouth portion image is taken, and

calculate the sealing surface inclination of the bottle (8) in a vertically standing position by using the two points G and H of the mouth portion and the two points M and N of the base portion.

**2.** The glass bottle inspection device (1) according to Claim 1,

wherein, when the coordinates of the two points G and H on the sealing surface of the bottle mouth portion (8a) are respectively (Gx, Gy) and (Hx, Hy) and the coordinates of the two points M and N at the bottom end (8b) of the bottle (8) are respectively (Mx, My) and (Nx, Ny), the device (1) is configured to calculate the sealing surface inclination of the bottle (8) in the vertically standing position by using the following expression:

```
sealing surface inclination = |(Gy - Hy) - (My - Ny)(Gx
- Hx)/(Mx- Nx)|.
```

**Patentansprüche**

**1.** Glasflaschen-Inspektionsvorrichtung (1), umfassend: Drehmittel, die bewirken, dass eine Glasflasche (8) um eine Flaschenachse gedreht wird; Mundabschnitt-Beleuchtungsmittel (3), die Licht in Richtung einer Flaschenmündung (8a) der Glasflasche (8) emittieren;

Mundabschnitt-Bildaufnahmemittel (2), die konfiguriert sind, um Bilder von der Flaschenmündung (8a) aufzunehmen, die durch das Licht beleuchtet wird, das von den Mundstück-Beleuchtungsmitteln (3) während einer Drehung der Flasche (8) emittiert wird;

Bodenabschnitt-Beleuchtungsmittel (5), die Licht in Richtung eines Bodenabschnitts (8b) der Glasflasche (8) emittieren; und Bodenabschnitt-Bildaufnahmemittel (4), die konfiguriert sind, um Bilder des Bodenabschnitts (8b) aufzunehmen, der durch das Licht beleuchtet wird, das von den Bodenabschnitt-Beleuchtungsmitteln (5) während einer Drehung der Flasche (8) emittiert wird,

wobei die Vorrichtung zu Folgendem konfiguriert ist:

Erfassen von zwei Punkten G und H auf einer Dichtfläche der Flaschenmündung (8a) in einem Mündungsabschnittsbild, das von dem Mündungsabschnitts-Bildaufnahmemittel (2) aufgenommen wird,

Erfassen von zwei Punkten M und N an einem unteren Ende (8b) der Flasche (8) in einem Bodenabschnittsbild, das von dem Bodenabschnitt-Bildaufnahmemittel (4) zur gleichen Zeit und in der gleichen Ebene wie das Mündungsabschnittbild aufgenommen wird, und

Berechnen der Dichtflächenneigung der Flasche (8) in einer senkrecht stehenden Position durch Verwenden der zwei Punkte G und H des Mündungsabschnitts und der zwei Punkte M and N des Bodenabschnitts.

**2.** Glasflaschen-Inspektionsvorrichtung (1) gemäß Anspruch 1, wobei, wenn die Koordinaten der zwei Punkte G und H auf der Dichtfläche des Flaschenmündungsabschnitts (8a) (Gx, Gy) bzw. (Hx, Hy) sind und die Koordinaten der zwei Punkte M und N an dem unteren Ende (8b) der Flasche (8) (Mx, My) bzw. (Nx, Ny) sind, die Vorrichtung (1) konfiguriert ist, um die Neigung der Dichtfläche der Flasche (8) in der vertikal stehenden Position unter Verwendung des folgenden Ausdrucks zu berechnen:

$$\text{Dichtflächenneigung} = |\,(Gy - Hy) - (My - Ny)(Gx - Hx)/(Mx- Nx)\,|$$

**Revendications**

**1.** Un dispositif d'inspection de bouteilles en verre (1) comprenant :

un moyen de rotation qui fait tourner une bouteille en verre (8) autour d'un axe de bouteille ;

un moyen d'éclairage de la partie d'embouchure (3) qui émet de la lumière vers une embouchure de bouteille (8a) de la bouteille en verre (8) ;

un moyen de capture d'image de la partie embouchure (2) configuré pour prendre des images de l'embouchure de la bouteille (8a) éclairée par la lumière émise par le moyen d'éclairage de la partie embouchure (3) pendant la rotation de la bouteille (8) ;

un moyen d'éclairage de la partie de base (5) qui émet de la lumière vers une partie de base (8b) de la bouteille en verre (8) ; et

un moyen de capture d'image de la partie de base (4) configuré pour prendre des images de la partie de base (8b) éclairée par la lumière émise par le moyen d'éclairage de la partie de base (5) pendant la rotation de la bouteille (8),

dans lequel le dispositif est configuré pour :

détecter deux points G et H sur une surface d'étanchéité de l'embouchure de bouteille (8a) dans une image de partie d'embouchure capturée par le moyen de capture d'image de la partie d'embouchure (2),

détecter deux points M et N à une extrémité inférieure (8b) de la bouteille (8) dans une image de partie de base capturée par le moyen de capture d'image de partie de base (4) en même temps et dans le même plan que l'image de partie d'embouchure est capturée, et

calculer l'inclinaison de la surface d'étanchéité de la bouteille (8) dans une position verticale debout en utilisant les deux points G et H de la partie d'embouchure et les deux points M et N de la partie de base.

2. Le dispositif d'inspection de bouteilles en verre (1) selon la revendication 1, dans lequel, lorsque les coordonnées des deux points G et H sur la surface d'étanchéité de la partie d'embouchure de la bouteille (8a) sont respectivement $(Gx, Gy)$ et $(Hx, Hy)$ et que les coordonnées des deux points M et N à l'extrémité inférieure (8b) de la bouteille (8) sont respectivement $(Mx, My)$ et $(Nx, Ny)$, le dispositif (1) est configuré pour calculer l'inclinaison de la surface d'étanchéité de la bouteille (8) dans la position verticale debout en utilisant l'expression suivante :

$$\text{inclinaison de la surface d'étanchéité} = | (Gy - Hy) - (My - Ny)(Gx - Hx)/(Mx - Nx) |.$$

Figure 1

Figure 2

Figure 3

$Gx-Hx$

$G\ (Gx,\ Gy)$

$\dfrac{(My-Ny)\ (Gx-Hx)}{(Mx-Nx)}$

$Gy-Hy$

$H\ (Hx,\ Hy)$

SEALING
SURFACE $= (Gy-Hy) - \dfrac{(My-Ny)\ (Gx-Hx)}{(Mx-Nx)}$
INCLINATION

$M\ (Mx,\ My)$

$N\ (Nx,\ Ny)$

$\dfrac{(My-Ny)\ (Gx-Hx)}{(Mx-Nx)}$

$My-Ny$

$Mx-Nx$

Y

X

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240468 A
- JP 2007240469 A
- JP H09178448 B